# EUROPÄISCHE PATENTANMELDUNG

(11) **EP 2 075 157 A2**
(43) Veröffentlichungstag der Anmeldung: **01.07.2009**
(21) Anmeldenummer: 08019308.9
(22) Anmeldetag: 05.11.2008
(51) Int. Cl.: B60N 3/10

(54) **Halter für einen Gatränkebahälter**

(30) Priorität: 18.12.2007 DE 102007061042
(71) Anmelder: fischer automotive systems GmbH & Co. KG, 72160 Horb (DE)
(72) Erfinder: Bastian, Ulf-Lothar, 72285 Pfalzgrafenweiler (DE)

(57) **Zusammenfassung**

Die Erfindung betrifft einen Halter ("Cupholder") zum Einstellen eines nicht dargestellten Getränkebehälters wie beispielsweise einer Dose oder einer Flasche. Zum Durchmesserausgleich schlägt die Erfindung drei schwenkbare Klappen als Ausgleichselemente (5, 6) vor, deren eines Ausgleichselement (5) um eine horizontale Schwenkachse schwenkbar am Halter (1) gelagert und deren andere beiden Ausgleichselemente (6) in beide Umfangsrichtungen vom einen Ausgleichselement (5) abstehen und um vertikale Schwenkachsen schwenkbar am einen Ausgleichselement (5) gelagert sind. Alle drei Ausgleichselemente (5, 6) werden federbeaufschlagt in eine Behälteraufnahme (2) des Halters (1) hinein beaufschlagt. (Figur 1)

## Beschreibung

Die Erfindung betrifft einen Halter für einen Getränkebehälter mit den Merkmalen des Oberbegriffs des Anspruchs 1. Derartige Halter, die vielfach als "Cupholder" bezeichnet werden, werden üblicherweise in Kraftfahrzeuge eingebaut und dienen der kippsicheren Halterung eines Getränkebehälters wie beispielsweise einer Getränkedose, eines Bechers, einer Tasse oder Flasche.

Ein derartiger Halter ist bekannt aus der Offenlegungsschrift DE 197 29 689 A1. Der bekannte Halter weist eine napfförmige, oben offene Behälteraufnahme zum Einstellen eines Getränkebehälters auf. Wenn nachfolgend Begriffe wie "oben" oder "vertikal" verwendet werden, die eine Raumrichtung angeben, beziehen sie sich auf eine vorgesehene Einbau- und Gebrauchslage des Halters. Zur Anpassung an Getränkebehälter verschiedenen Durchmessers weist der bekannte Halter Haltebacken auf, die federbeaufschlagt in die Behälteraufnahme hinein sind. Die Haltebacken sind schwenkbar an Hebeln gelagert, die ihrerseits schwenkbar an einer Umfangswand der Behälteraufnahme gelagert sind. Die Schwenkachsen der Schwenklagerung der Haltebacken an den Hebeln sind parallel zu den Schwenkachsen der Hebel an der Umfangswand der Behälteraufnahme und verlaufen in tangentialer Richtung bzw. parallel zur tangentialen Richtung der Umfangswand der Behälteraufnahme. Die Haltebacken stehen ein Stück weit von der Umfangswand in die Behälteraufnahme hinein und werden durch Einstellen eines Getränkebehälters gegen ihre Federbeaufschlagung nach außen gedrückt. Auf diese Weise erfolgt eine Durchmesseranpassung. Aufgrund der Schwenklagerung der Haltebacken an den Hebeln mit einer zur Behälteraufnahme tangentialen, d. h. horizontalen Schwenkachse, passen sich die Haltebacken an eine Außenkontur eines eingestellten Getränkebehälters an.

Aufgabe der Erfindung ist eine Verbesserung des Durchmesserausgleichs eines Halters für einen Getränkebehälter der vorstehend erläuterten Art.

Diese Aufgabe wird erfindungsgemäß durch die Merkmale des Anspruchs 1 gelöst. Der erfindungsgemäße Halter weist zwei Ausgleichselemente auf. Das eine Ausgleichselement ist mit einer Schwenklagerung in die Behälteraufnahme des Halters hinein und aus ihr heraus schwenkbar gelagert. Das andere Ausgleichselement ist mit einer Schwenklagerung schwenkbar am einen Ausgleichselement gelagert, es ist ebenfalls in die Behälteraufnahme hinein und aus ihr heraus schwenkbar. Federelemente beaufschlagen die Ausgleichselemente in die Behälteraufnahme hinein. Wie beim bekannten Halter werden die Ausgleichselemente des erfindungsgemäßen Halters beim Einstellen des Getränkebehälters in die Behälteraufnahme vom Getränkebehälter gegen die Kraft der Federelemente nach außen gedrückt. Die Federelemente beaufschlagen die Ausgleichselemente nach innen gegen den in die Behälteraufnahme eingestellten Getränkebehälter, so dass sie am Getränkebehälter anliegen und den Getränkebehälter kippsicher in der Behälteraufnahme halten. Die Schwenkachsen der beiden Ausgleichselemente sind nicht parallel, sondern verlaufen in einem Winkel zueinander. Vorzugsweise verlaufen die Schwenkachsen der beiden Ausgleichselemente rechtwinklig oder ungefähr rechtwinklig zueinander. Durch die Erfindung lässt sich eine Anlage der Ausgleichselemente an einem in die Behälteraufnahme eingestellten Getränkebehälter in Umfangsrichtung vergrößern. Dadurch wird der Halt des Getränkebehälters in der Behälteraufnahme verbessert, so dass ein Paar Ausgleichselemente an einer Stelle des Umfangs der Behälteraufnahme zum kippsicheren Halten eines eingestellten Getränkebehälters genügt. Das Vorsehen von mehr Paaren an Ausgleichselementen wird von der Erfindung nicht ausgeschlossen. Als Paar von Ausgleichselementen sind zwei Ausgleichselemente gemeint, deren eines schwenkbar an der Behälteraufnahme und das andere schwenkbar am einen Ausgleichselement gelagert ist.

Vorzugsweise weist der Halter drei Ausgleichselemente auf, deren eines wie erläutert in die Behälteraufnahme hinein und aus ihr heraus schwenkbar am Halter gelagert ist. Die beiden anderen Ausgleichselemente stehen in entgegengesetzten Umfangsrichtungen von dem einen Ausgleichselement ab, an dem sie, wie ebenfalls vorstehend erläutert, in die Behälteraufnahme hinein und aus ihr heraus schwenkbar gelagert sind. Die Ausgleichselemente werden von Federelementen in die Behälteraufnahme hinein beaufschlagt. Diese Ausgestaltung der Erfindung vergrößert die Anlage der Ausgleichselemente an einem in die Behälteraufnahme eingestellten Getränkebehälter in Umfangsrichtung und erhöhen dadurch den kippsicheren Halt des eingestellten Getränkebehälters.

Insbesondere sieht die Erfindung vor, dass die Schwenkachse der Schwenklagerung des einen Ausgleichselements tangential zur Behälteraufnahme verläuft, womit auch eine zu einer Tangente parallele Schwenkachse gemeint ist. In bevorzugter Ausgestaltung der Erfindung befindet sich die Schwenklagerung in einem unteren Bereich des einen Ausgleichselements. Dadurch bewegt sich der obere Bereich des Ausgleichselements beim Schwenken bzgl. der Behälteraufnahme nach innen oder nach außen. Dadurch wird erreicht, dass das Aufnahmeelement mit seinem oberen Bereich an einem in die Behälteraufnahme eingestellten Getränkebehälter anliegt, diesen also weit oben in der Behälteraufnahme seitlich abstützt. Der kippsichere Halt eines eingestellten Getränkebehälters ist dadurch verbessert.

Eine bevorzugte Ausgestaltung der Erfindung sieht eine vertikale Schwenkachse des bzw. der anderen Ausgleichselemente vor, die schwenkbar am einen Ausgleichselement gelagert sind. Es genügt eine ungefähr vertikale Ausrichtung der Schwenkachse, die zudem durch Schwenken des einen Ausgleichselements ihre Richtung bzw. Neigung ändert. Durch die vertikale Schwenkachse wird eine Richtungsanpassung des Ausgleichselements erzielt, das Ausgleichselement liegt unabhängig vom Durchmesser des eingestellten Getränkebehälters tangential an diesem an. Die Schwenkachsen des einen Ausgleichselements und eines anderen Ausgleichselements können jedoch auch beide ungefähr in einer horizontalen Ebene liegen.

Die Erfindung wird nachfolgend anhand eines in der Zeichnung dargestellten Ausführungsbeispiels näher erläutert. Es zeigen:

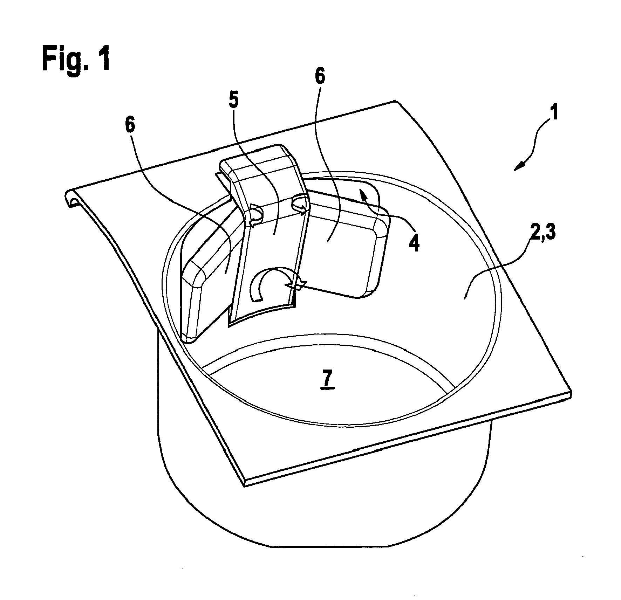

- Figur 1: einen Halter gemäß der Erfindung in perspektivischer Darstellung schräg von oben gesehen; und
- Figur 2: den Halter aus Figur 1 schräg von außen unten gesehen.

Der in der Zeichnung dargestellte, erfindungsgemäße Halter 1 ist zum Einbau in beispielsweise einen nicht dargestellten Kraftwagen vorgesehen. Er dient zum kippsicheren Halten eines ebenfalls nicht dargestellten Getränkebehälters wie beispielsweise einer Getränkedose, eines Bechers oder einer Flasche. Solche Halter 1 werden auch als "Cupholder" bezeichnet.

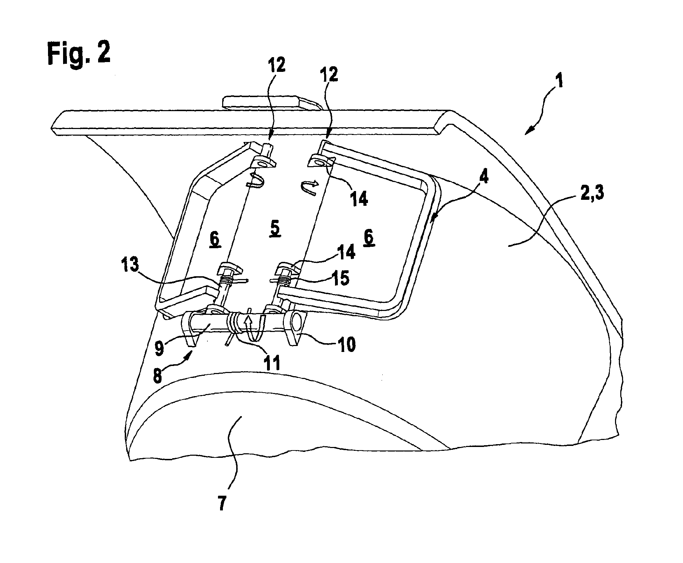

Der Halter 1 weist eine napfförmige, oben offene Behälteraufnahme 2 auf, wobei sich "oben" auf eine vorgesehene Einbaulage des Halters 1 bezieht. Eine Umfangswand 3 der Behälteraufnahme 2 weist eine rechteckige Aussparung 4 mit gerundeten Ecken auf, die sich in Umfangsrichtung erstreckt. In der Aussparung 4 sind drei Ausgleichselemente 5, 6 angeordnet, die die Form plattenförmiger Klappen haben und schwenkbar gelagert sind. Ein mittleres der drei Ausgleichselemente 5 erstreckt sich im Wesentlichen vertikal, d. h. in achsparalleler Richtung der napfförmigen Behälteraufnahme 2. Dieses Ausgleichselement 5, das radial gesehen die Form einer schmalen, stehenden rechteckigen Platte aufweist, endet mit etwas Abstand über einem Boden 7 der Behälteraufnahme 2 und erstreckt sich bis zu einem oberen Rand der Behälteraufnahme 2, wo das Ausgleichselement 5 nach außen abgewinkelt ist. An seinem unteren Ende weist das mittlere Ausgleichselement 5 eine Schwenklagerung 8 auf (Figur 2). Die Schwenklagerung 8 weist eine Welle 9 auf, die mit dem Ausgleichselement 5 einstückig und an seinem unteren Rand angeordnet ist. Die Welle 9 verläuft horizontal, d. h. tangential zur Umfangswand 3 der Behälteraufnahme 2. Die Welle 9 ist an beiden Enden in Lagerböcken 10 gelagert, die sich auf der Außenseite der Umfangswand 3 der Behälteraufnahme 2 befinden. Die Schwenklagerung 8 definiert eine horizontale, zur Umfangswand 3 der Behälteraufnahme 2 tangentiale Schwenkachse, um die das mittlere Ausgleichselement 5 in die Behälteraufnahme 2 hinein und aus ihr heraus schwenkbar gelagert ist. Eine auf die Welle 9 aufgesetzte Schraubenschenkelfeder bildet ein Federelement 11, das das Ausgleichselement 5 in die Behälteraufnahme 2 hinein beaufschlagt. Durch die Schwenklagerung 8 am unteren Rand des Ausgleichselements 5 liegt dieses in seinem oberen Bereich an einem nicht dargestellten, in die Behälteraufnahme 2 eingestellten Getränkebehälter an. Das bedeutet, das Ausgleichselement 5 liegt relativ weit oben bzw. mit großem Abstand vom Boden 7 der Behälteraufnahme 2 an einem eingestellten Getränkebehälter an, was einem kippsicheren Halten des eingestellten Getränkebehälters dient.

Die beiden anderen, seitlichen Ausgleichselemente 6, die ebenfalls als plattenförmige Klappen ausgeführt sind, sind an beiden vertikalen Längsrändern des mittleren Ausgleichselements 5 schwenkbar gelagert. Die beiden seitlichen Ausgleichselemente 6 erstrecken sich von beiden Seiten des mittleren Ausgleichselements 5 in Umfangsrichtung der Behälteraufnahme 2. Die Schwenklagerungen 12 der beiden seitlichen Ausgleichselemente 6 weisen Wellen 13 an ihren Rändern auf, die den vertikalen Längsrändern des mittleren Ausgleichselements 5 zugewandt sind. Die Wellen 13 sind einstückig mit den seitlichen Ausgleichselementen 6. Sie sind in Lagerböcken 14 auf der Außenseite des mittleren Ausgleichselements 5 gelagert. Die Schwenklagerungen 12 der beiden seitlichen Ausgleichselemente 6 weisen näherungsweise vertikal, d. h. näherungsweise achsparallel zur Behälteraufnahme 2 verlaufende Schwenkachsen auf. Die Schwenkachsen der beiden seitlichen Ausgleichselemente 6 verlaufen somit rechtwinklig zur Schwenkachse des mittleren Ausgleichselements 5. Mit den Schwenklagerungen 12 sind die seitlichen Ausgleichselemente 6 in die Behälteraufnahme 2 hinein und aus ihr heraus schwenkbar gelagert. Auch die beiden seitlichen Ausgleichselemente 6 weisen Schraubenschenkelfedern auf, die Federelemente 15 bilden, die die seitlichen Ausgleichselemente 6 in die Behälteraufnahme 2 hinein beaufschlagen. Die beiden seitlichen Ausgleichselemente 6 liegen durch ihre Federbeaufschlagung am Umfang eines nicht dargestellten, in die Behälteraufnahme 2 eingestellten Getränkebehälters an. Durch die beiden seitlichen Ausgleichselemente 6, die sich von beiden Seiten des mittleren Ausgleichselements 5 in beiden Umfangsrichtungen der Behälteraufnahme 2 erstrecken, umgreifen die insgesamt drei Ausgleichselemente 5, 6 einen eingestellten Getränkebehälter auf einem vergleichsweise großen Umfangsabschnitt. Da nicht nur das mittlere Ausgleichselement 5 federbeaufschlagt in die Behälteraufnahme 2 hineinschwenkt, sondern zusätzlich auch die beiden seitlichen, in beiden Umfangsrichtungen abstehenden Ausgleichselemente 6 federbeaufschlagt in die Behälteraufnahme 2 hineinschwenken, wird auch eine Anpassung an einen Krümmungsradius einer Umfangswand des eingestellten Getränkebehälters erreicht. Der Halt eines eingestellten Getränkebehälters ist dadurch verbessert und es genügt die Anordnung der drei Ausgleichselemente 5, 6 an einer Umfangsstelle. Es sind keine weiteren Ausgleichselemente an anderen Umfangsstellen erforderlich.

### Bezugszeichenliste

### Halter für einen Getränkebehälter

- 1: Halter
- 2: Behälteraufnahme
- 3: Umfangswand
- 4: Aussparung
- 5, 6: Ausgleichselemente
- 7: Boden
- 8: Schwenklagerung
- 9: Welle
- 10: Lagerbock
- 11: Federelement
- 12: Schwenklagerung
- 13: Welle
- 14: Lagerbock
- 15: Federelement

## Patentansprüche

1. Halter für einen Getränkebehälter, mit einer Behälteraufnahme (2) für den Getränkebehälter, mit zwei Ausgleichselementen (5, 6), mit einer Schwenklagerung (8), die eines der beiden Ausgleichselemente (5) in die Behälteraufnahme (2) hinein und aus ihr heraus schwenkbar lagert, mit einem Federelement (11), das das eine Ausgleichselement (5) in die Behälteraufnahme (2) hinein beaufschlagt, mit einer weiteren Schwenklagerung (12), die das andere Ausgleichselement (6) in die Behälteraufnahme (2) hinein und aus ihr heraus schwenkbar an dem einen Ausgleichselement (5) lagert und mit einem weiteren Federelement (15), das das andere Ausgleichselement (6) in die Behälteraufnahme (2) hinein beaufschlagt, **dadurch gekennzeichnet, dass** Schwenkachsen der beiden Schwenklagerungen (8, 12) in einem Winkel zueinander verlaufen.

2. Halter nach Anspruch 1, **dadurch gekennzeichnet, dass** der Halter (1) drei Ausgleichselemente (5, 6) aufweist, von den zwei in entgegengesetzten Umfangsrichtungen von dem einen Ausgleichselement (5) abstehend mit Schwenklagerungen (12) schwenkbar an dem einen Ausgleichselement (5) gelagert sind und mit Federelementen (11, 15) in die Behälteraufnahme (2) hinein beaufschlagt werden.

3. Halter nach Anspruch 1, **dadurch gekennzeichnet, dass** die Schwenkachse der Schwenklagerung (8) des einen Ausgleichselements (5) tangential zur Behälteraufnahme (2) verläuft.

4. Halter nach Anspruch 3, **dadurch gekennzeichnet, dass** die Schwenklagerung (8) in einem unteren Bereich des einen Ausgleichselements (5) angeordnet ist.

5. Halter nach Anspruch 1, **dadurch gekennzeichnet, dass** die Schwenkachse der Schwenklagerung (12) des anderen Ausgleichselements (6) in vertikaler Richtung der Behälteraufnahme (2) verläuft.
